# EUROPEAN PATENT APPLICATION

(11) **EP 0 618 056 A1**
(43) Date of publication of application: **05.10.1994**
(21) Application number: 94104583.3
(22) Date of filing: 23.03.1994
(51) Int. Cl.: B29C 45/26, B29C 45/16, B29D 23/22

(54) **A method of producing a hollow article of elastomeric material**

(30) Priority: 02.04.1993 IT TO930223
(71) Applicant: CONTITECH AGES S.p.A., I-10026 Santena (Torino) (IT)
(72) Inventor: Dompe', Luigi, I-10128 Torino (IT)
(74) Representative: Gerbino, Angelo

(57) **Abstract**

The method of producing a hollow article (10) of elastomeric material formed by at least two portions (16, 22) having different cross-sections and/or axes oriented in different directions comprises the steps of moulding a first portion (22) of the article (10) in a first die, introducing at least a part (18) of the first portion (22) into an internal cavity (26) of a second die (24), and moulding a second portion (16) of the article (10) in the second die (24) as a continuation of the part (18) of the first portion (22) which is introduced into the internal cavity (26) of the second die (24).

## Description

The present invention relates to a method of producing a hollow article of elastomeric material formed by at least two portions having different cross-sections and/or axes oriented in different directions.

Articles of this type may be, for example, the connecting elements used in the pneumatic, hydraulic or oleodynamic systems of a motor vehicle which are formed by several intersecting hoses, possibly of different diameters.

Known methods of producing such articles provide for the various portions of the article to be moulded in separate dies and subsequently joined together.

In order to carry out the latter operation, the ends of two portions which are intended to be adjacent one another in the finished article are fitted facing one another on a premoulded plastics sleeve.

The latter is then placed in a further die into which molten elastomeric material is injected and, once it has set, acts as a moulded-on element joining the two ends which are fitted onto the plastics sleeve.

The known methods thus have the disadvantage that they require an additional die for the moulding of the joining element. Moreover, in order to ensure success, it is necessary to carry out special treatments, for example, scraping and tackifying, on the end surfaces of the two portions to be joined to ensure good adhesion of the joining material.

In order to avoid the problems mentioned, the subject of the present invention is a method of the type indicated above, characterized in that it comprises the steps of:
- moulding a first portion of the article in a first die,
- introducing at least a part of the first portion into an internal cavity of a second die, and
- moulding a second portion of the article in the second die, as a continuation of the part of the first portion which is introduced into the internal cavity of the second die.
The method according to the invention thus requires neither

the use of plastics sleeves or additional dies, apart from those necessary to mould the various elastomeric portions of the article, nor special treatments of the ends of the two portions of the article to be joined, particularly the part of the first portion on which the second portion is moulded.

The method of the invention thus has the advantages, in comparison with known methods, that it requires less tooling and labour and that it reduces the cycle time required to produce a given article.

According to a particularly convenient embodiment of the method of the invention, the part of the first portion of the article which is intended to be inserted in the internal cavity of the second die has a shoulder surface for abutting a corresponding surface of the wall of the cavity of the second die.

This prevents the risk of the molten elastomeric material which is intended to constitute the second portion of the article, and which is introduced into the second die under pressure, expelling from the die the part of the first portion previously positioned therein.

A further subject of the present invention is an article of elastomeric material which can be produced with the use of the aforementioned methods.

In comparison with a similar article produced with the use of known methods, this article has better mechanical strength since it is made essentially of a single material and does not therefore have potentially weak points due to the need to join different materials together.

Further advantages and characteristics of the present invention will become clear from the detailed description which follows with reference to the appended drawings, provided by way of non-limiting example, in which:
Figure 1 is a perspective view of a connecting element produced with the use of the method of the invention,
Figures 2 and 3 show schematically successive stages of the moulding of the element of Figure 1, and
Figure 4 is a section taken on the line IV-IV of Figure 3.

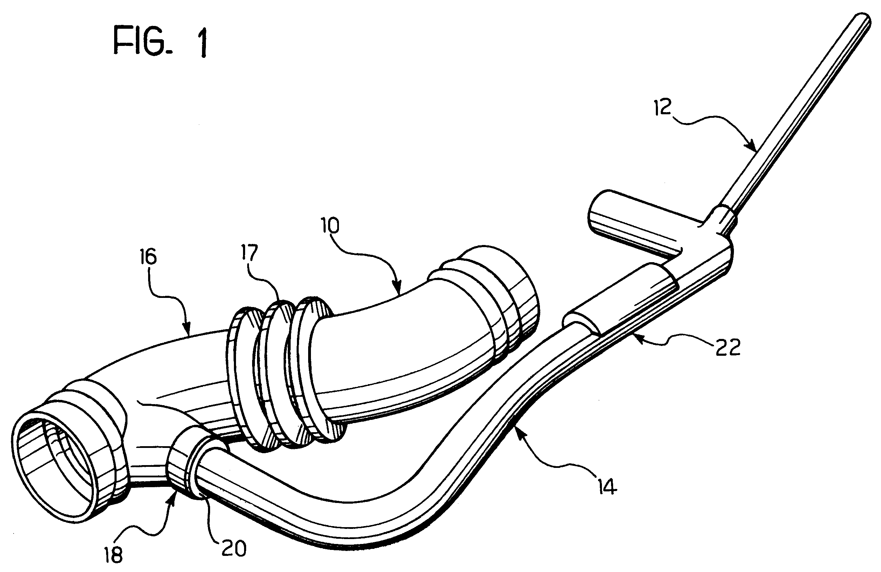

A connecting element 10 for use in the pneumatic, hydraulic or oleodynamic systems of a motor vehicle is formed (Fig. 1) by a first small-diameter hose 12 which is engaged transversely in a second hose 14 of intermediate diameter which, in turn is engaged transversely in a third large-diameter hose 16 having a bellows-like portion 17. The three hoses 12, 14 and 16 are made of elastomeric material and have intersecting axes.

An end portion 18 of the second hose 14 has a shoulder surface 20, the function of which will become clear from the following description.

The method of producing the connecting element 10 provides, first of all, for the production of the assembly constituted by the first hose 12 and the second hose 14, which is defined as the first portion 22 of the connecting element 10, by conventional, known techniques, with the use of a first die, not shown in the drawings.

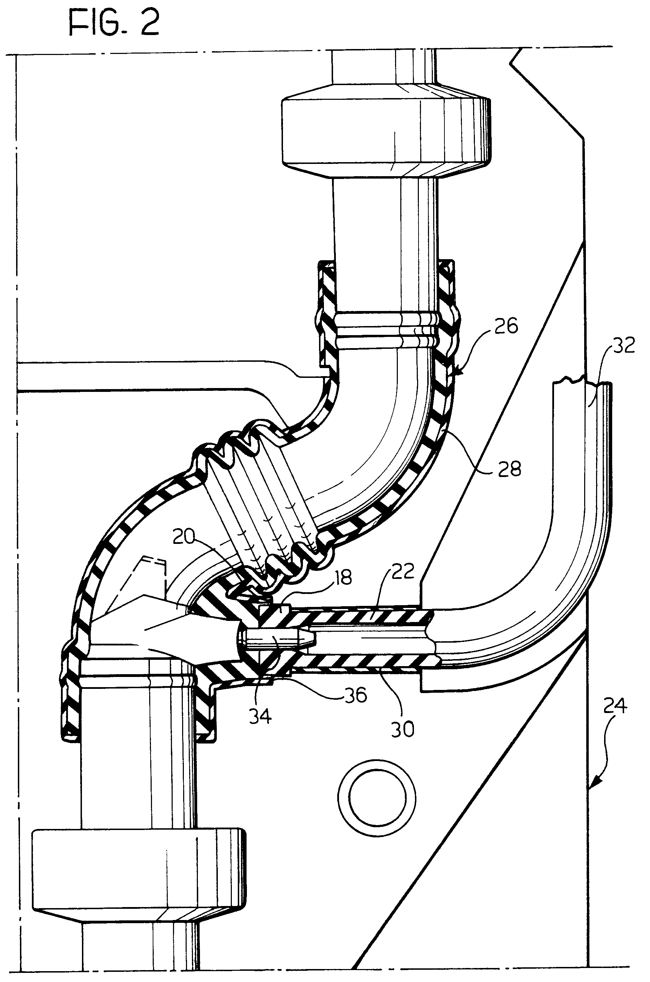

A second die 24 (Figs. 2-4), which is used to produce the third hose 16 defined as the second portion of the connecting element 10, has an internal cavity 26 formed by a main branch 28, from which a secondary branch 30 extends transversely.

A male element 32 is positioned in the main branch 28, which acts as a die for the moulding of the second portion 16, and a pin 34 extends transversely from the male element 32 into the secondary branch 30.

In order to produce the second portion 16 of the connecting element 10, the end part 18 of the first portion 22 is at first introduced (Fig.2) into the secondary branch 30 of the cavity 26 of the second die 24, by making use of its resilient deformability and fitting it onto the transversely-projecting pin 34 of the male element 32.

During this operation, care is taken that the shoulder surface 20 of the end part 18 abuts a corresponding surface 36 of the wall of the cavity 26 of the second die 24.

The end part 18 and the pin 34 thus completely obstruct the secondary branch 30 of the cavity 26.

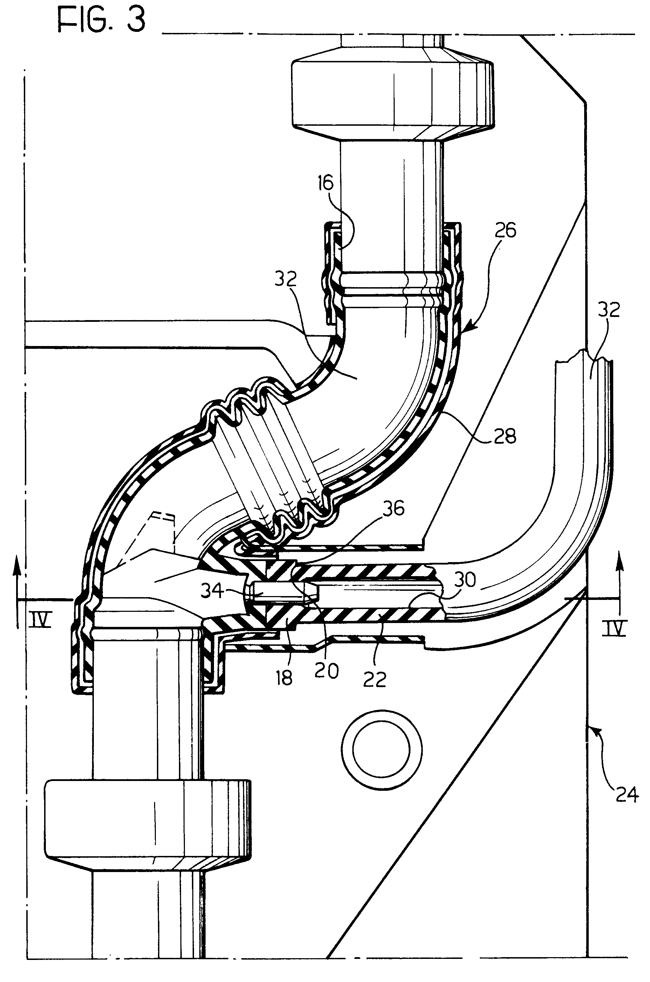

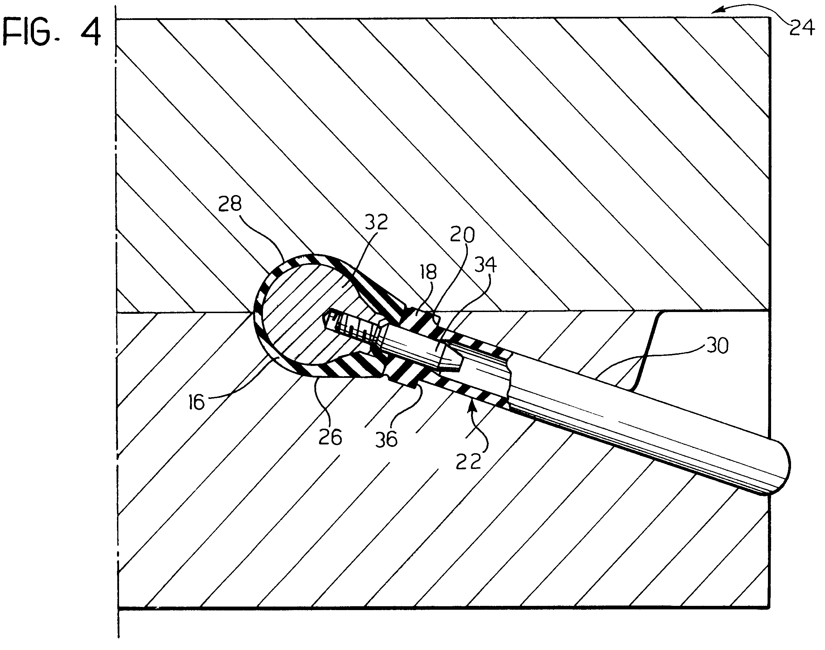

Molten elastomeric material is then injected into the main branch 28 of the cavity 26 and, once it has set, (Figs. 3, 4) forms the second portion 16 of the article 10, as a continuation of the end part 18 of the first portion 22 previously introduced into the cavity 26.

During this operation, the end part 18 of the first portion 22 acts as a plug, preventing any molten material from escaping from the cavity 26 of the die 24. At the same time, the engagement between the shoulder surface 20 of the end part 18 and the abutment surface 36 of the wall of the cavity 26 prevents the molten material under pressure from expelling the end part 18 from the cavity 26.

The production of the connecting element 10 is thus completed.

Clearly, a method of the type described above may also be used for producing the first portion 22 of the connecting element 10 formed by the hose 12 which is engaged transversely in the hose 14.

According to a variant of the method described above, not shown in the drawings, the first portion of the connecting element has a projection which extends from the part which is intended to be introduced into the cavity of the second die, for insertion in a corresponding recess in the wall of the second die.

The coupling between the projection and the recess thus securely achieves correct angular orientation of the first portion about its own axis and relative to the second portion, which is moulded subsequently.

Naturally, the principle of the invention remaining the same, the details of construction and forms of embodiment may be varied widely with respect to those described and illustrated, without thereby departing from the scope of the present invention.

In particular, the method of the invention may be used to produce not only articles formed by several portions having axes oriented in different directions, but also articles formed by several portions having a common axis but different cross-sections.

## Claims

1. A method of producing a hollow article (10) of elastomeric material formed by at least two portions (16, 22) having different cross-sections and/or axes oriented in different directions, the method being characterized in that it comprises the steps of:
- moulding a first portion (22) of the article (10) in a first die,
- introducing at least a part (18) of the first portion (22) into an internal cavity (26) of a second die (24), and
- moulding a second portion (16) of the article (10) in the second die (24) as a continuation of the part (18) of the first portion (22) which is introduced into the internal cavity (26) of the second die (24).

2. A method according to Claim 1, characterized in that the part (18) of the first portion (22) which is intended to be inserted in the internal cavity (26) of the second die (24) has a shoulder surface (20) for abutting a corresponding surface (36) of the wall of the cavity (26) of the second die (24).

3. A method according to Claim 2, characterized in that the first (22) and second (16) portions are tubular, in that the cavity (26) is formed by a main branch (28) and a secondary branch (30) which extends transversely from the main branch (28) and in which a male element (32) is disposed from which a pin (34) extends transversely into the secondary branch (30), and in that the part (18) of the first portion (22) is introduced into the secondary branch (30) of the cavity (26) of the second die (24) by being fitted onto the pin (34) which projects transversely from the male element (32).

4. A method according to any one of the preceding claims, characterized in that the first portion (22) has a projection extending from the part (18) which is intended to be introduced into the cavity (26) of the second die (24) for insertion in a corresponding recess in the wall of the second die (24) for securely achieving the correct angular orientation of the first portion (22) about its own axis.

5. An article (10) of elastomeric material which can be produced by a method according to any one of the preceding claims.
